# EUROPEAN PATENT SPECIFICATION

(11) **EP 2 519 389 B1**
(45) Date of publication and mention of the grant of the patent: **26.02.2014**
(21) Application number: 10810991.9
(22) Date of filing: 16.12.2010
(51) Int. Cl.: C10L 5/36, B27N 3/18, C10L 5/44

(54) **PROCESS FOR THE PRODUCTION AND SORTING OF PELLETS BY MEANS OF A CONTROL CHAMBER PLACED IN PRODUCTION PLANTS.**
VERFAHREN ZUR HERSTELLUNG UND SORTIERUNG VON PELLETS ANHAND EINER IN EINER PRODUKTIONSANLAGE POSITIONIERTEN STEUERKAMMER.
PROCÉDÉ DE PRODUCTION ET TRIAGE DE PASTILLES AU MOYEN D'UNE CHAMBRE DE COMMANDE PLACÉE DANS DES USINES DE PRODUCTION.

(30) Priority: 29.12.2009 IT PG20090070
(43) Date of publication of application: 07.11.2012
(73) Proprietor: Eco Pellet Group S.r.l., 06073 Corciano (PG) (IT)
(72) Inventor: RIZZUTO, Valentino, I-06073 - Corciano (PG) (IT); RAGNONI, Federico, I-06132 - Perugia (IT); RAGNONI, Giuliano, I-06132 - Perugia (IT); RIZZUTO, Ruben, I-06073 - Corciano (PG) (IT)
(74) Representative: Perrotta, Aldo
(86) International application number: PCT/IT2010/000502
(87) International publication number: WO 2011/080786

(56) References cited:
- EP-A1- 0 969 076
- EP-A1- 2 025 738
- WO-A1-97/16590
- WO-A1-99/37412
- WO-A1-2007/039233
- DE-A1- 4 305 006
- DE-U1-202004 007 111

## Description

### TECHNICAL FIELD

This invention regards a process for the production of pellets according to claim 1.

### BACKGROUND ART

No process like this one is found in the current state of the art. The only method used until now is that of taking samples of pellets to be sent to the competent analysis institutes to check their parameters.

The analysis of these samples provides the data that become the reference for the entire production of the pellet plant that produced these samples. But this does not mean that all the material produced before or after is equal or similar to the sample.

Indeed, the analysis of this sample provides data that become the reference for the entire production of the pellet plant that produced these samples. Given that the wood in the pellet is a living material that has variations within it, the sample described above does not at all prove that all of the production of that plant corresponds to the sample analyzed.

Indeed, the taking of samples automatically excludes the monitoring of the entire production batch. Therefore, with the taking of samples, it is not possible to constantly monitor that among the biomass that will form the pellets there will not be toxic materials deriving from processing scrap and waste, with the presence of substances such as lacquers, paints, and sprays, or that there are no trees that were contaminated by radioactive, toxic or other environmental factors.

A previous Italian patent application filed on 29 May 2005 under no. PG2005A0019 and the holder of which is the applicant, as shown by application for registration of merger N. AR2009E000010 dated 7 September 2009, emphasized the need to equip a special plant for pellet production, as described in PG2005A0019, with a control chamber that analyzed pellet samples on the spot and not at outside laboratories. It followed that the pellet sample analyzed by the control chamber determined the rejection or the acceptance of the entire batch of pellets from which the sample analyzed was taken.

Therefore the applicant set out to solve, with this invention, four very important problems not present in the state of the art, which are:
1 - To equip any pellet production plant with a pellet control chamber.
2 - To analyze all the pellets that pass through it.
3 - To reject all pellets considered harmful.
4 - To put on the market only the pellets considered suitable.

### DISCLOSURE OF INVENTION

This new process is based on inserting in any industrial PELLET production plant and at any point of the plant a technological system called a "control chamber" that can do the job of evaluating the biomass that will form the pellet, detecting the presence of toxic materials deriving from processing scrap and waste with the presence of substances such as lacquers, paints, and sprays, or wood coming from trees contaminated by radioactive, toxic or other environmental factors.

The "control chamber" consists of a series of sensors, optical devices, weighing and control systems that can continuously monitor, analyze and grade all the pellets.

Along with analyzing pellets, the "control chamber" quantifies and classifies the rejects, entering the results in an easy-to-use databank.

The "control chamber" rejects this material from the production cycle, along with providing the aforesaid service.

All of the PELLETS that pass the "control chamber" analysis is, for all intents and purposes, completely analyzed, produced and certified in a constant, continuous line and controlled by computerized safety systems. Thus the pellets are not analyzed by sample as in the traditional plants currently in use.

By means of this process one obtains the absolute certainty that the PELLETS produced from natural wood or various processes are certified.

### BRIEF DESCRIPTION OF DRAWING

- (1) - Silo containing pellets not yet analyzed.
- (2) - Link between the silo (1) and conveyor belt (3) for the passage of the pellets.
- (3) - Conveyor belt for the pellets.
- (4) - Taking of pellets from the conveyor belt and sending them to the laboratory (5).
- (5) - Laboratory analysis of the pellets.
- (6) - Radiation control of the pellets.
- (7) - Three-way pellet discharge system.
- (8) - Storage silo for pellets that do not pass quality control.
- (9) - Storage silo for pellets that pass quality control.

### BEST MODE FOR CARRYING OUT THE INVENTION

The "control chamber" can be installed in any pellet production plant, whether it is already set up or in the installation stage.

The "control chamber" is installed in the place considered most effective according to the plant setup, although installation at the end of the industrial pellet process is to be considered the most suitable for the purpose, i.e. before bagging or packaging.

The "control chamber" continuously analyzes the product, checking certain values that are decisive for the quality and safety of the pellets, especially hydrocarbons, formaldehyde and radioactivity.

The "control chamber" consists of the following elements:
- pellet transport system,
- inserting of the laboratory in the line,
- radioactivity control,
- product discharge,
- three-way discharge system,
- reject silo with weighing cell,
- storage silo.

The pellets are analyzed during the processing cycle by means of:
- Sample control and/or continuous control of the presence of harmful substances, including hydrocarbons.
- Sample control and/or continuous control of the presence of formaldehyde.
- Sample control and/or continuous control of the presence of radioactivity.

The "control chamber" is also able, when requested and appropriately set up, to do other analyses on samples from the line regarding the composition of the pellets produced.

The process, analysis and validation of the pellets in the processing cycle is as follows:
- The pellets not yet analyzed enter the conveyor belt (3) from a silo (1) by means of any type of link (2) ;
- The path of the conveyor belt gives the system the possibility of collecting (4) and continuously analyzing the product in the laboratory (5);
- During the same path all of the product is analyzed by radiation control (6);
- The analyzed product ends its passage at the discharge, first passing through a three-way discharge system (7), commanded by the laboratory (5), which sends the pellets to the storage silos (8-9) according to the quality detected;
- The certified silo (9) receives the pellets that pass quality control, i.e. ecological pellets, and which can therefore be packaged and put on the market;
- The product that does not pass quality control, i.e. non-ecological pellets, is weighed and sent to the silo (8).

All of the control system data are automatically stored without the possibility of tampering and are available online, with alarms for the centralized control station via telephone line or satellite connection, Internet, or similar.

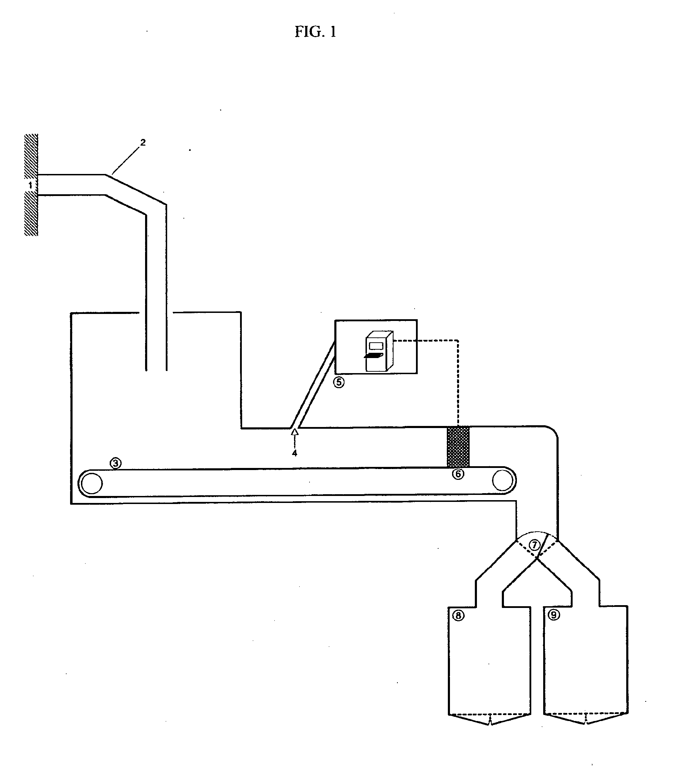

## Claims

1. Process for the production and selection of pellets comprising the step of providing a pellet production plant and the step of producing pellets from a biomass, **characterized in that** it comprises the step of analysing all the pellets that pass through the plant.

2. Process according to claim 1, **characterized in that** it provides for rejecting all the pellets considered harmful and for assigning to the market only the pellet considered suitable.

3. Process according to claim 1, **characterized in that** the pellets are analysed in a continuous way during the processing cycle to check for the presence of harmful substances including hydrocarbons.

4. Process according to claim 1, **characterized in that** the pellets are analysed in a continuous way during the processing cycle to check for the presence of formaldehyde.

5. Process according to claim 1, **characterized in that** the pellets are analysed in a continuous way during the processing cycle to check for the presence of radioactivity.

6. Process according to claim 1, **characterized in that** it comprises the following steps:
a - to put the pellets to be analysed in a silo;
b - to put the pellets of the silo of step (a) on a conveyor belt ;
c - collecting and continuously analysing the pellets in a control chamber along the path of the conveyor belt:
d - to perform on said path a check for radiation of all the pellets;
e - to end the passage of the pellets at the discharge, first passing through a three-way discharge system commanded by the control chamber, which sends the pellets to the storage silos according to the quality detected;
f - a silo receives the pellets that can be packaged and put on the market;
g - a silo receives the pellets that do not pass the quality control, wherein it is weighed.

7. Process according to clam 6, **characterized in that** all the control system data are automatically stored without the possibility of tampering, and are available on-line, with alarm for the centralized control station via telephone line or satellite connection, internet or similar.

## Patentansprüche

1. Verfahren zur Herstellung und Auswahl von Pellets das den Schritt der Bereitstellung eines Pelletwerkes und den Schritt der Herstellung von Pellets aus Biomasse umfasst, **dadurch gekennzeichnet, dass** es den Schritt der Prüfung aller die Fertigungsanlage durchlaufenden Pellets umfasst.

2. Verfahren nach Anspruch 1, **dadurch gekennzeichnet, dass** es das Aussortieren sämtlicher, als schädlich betrachteter Pellets vorsieht und nur als verwendbar betrachtete Pellets auf den Markt kommen.

3. Verfahren nach Anspruch 1, **dadurch gekennzeichnet, dass** die Pellets während dem Fertigungszyklus kontinuierlich untersucht werden, um zu überprüfen, dass sie keine Schadstoffe, darunter Kohlenwasserstoffe enthalten.

4. Verfahren nach Anspruch 1, **dadurch gekennzeichnet, dass** die Pellets während dem Fertigungszyklus kontinuierlich untersucht werden, um zu überprüfen, dass sie kein Formaldehyd enthalten.

5. Verfahren nach Anspruch 1, **dadurch gekennzeichnet, dass** die Pellets während dem Fertigungszyklus kontinuierlich untersucht werden, um zu überprüfen, dass sie nicht radioaktiv sind.

6. Verfahren nach Anspruch 1, **dadurch gekennzeichnet, dass** es die folgenden Schritte umfasst:
a) -die zu prüfenden Pellets werden in einem Vorratsturm gelagert;
b) -die in dem unter Schritt a) genannten Vorratsturm gelagerten Pellets gelangen auf ein Förderband;
c) - die Pellets werden gesammelt und in einer längs des Laufwegs des Förderbandes liegenden Kontrollkammer kontinuierlich untersucht;
d) - längs des oben genannten Laufweges werden alle Pellets auf Radioaktivität untersucht;
e) - der Durchlauf der Pellets endet am Ablass, dabei gehen sie zunächst durch ein Dreiwege-Ablasssystem, das von der Kontrolikammer gesteuert wird und dafür sorgt, dass die Pellets entsprechend der erfassten Qualität in die jeweiligen Vorratstürme gefahren werden;
f) - in einen Vorratsturm gelangen die Pellets, die verpackt und auf den Markt gebracht werden;
g) - in einen Vorratsturm gelangen die Pellets, die die Qualitätskontrolle, in der sie überprüft wurden, nicht bestanden haben.

7. Verfahren nach Anspruch 6, **dadurch gekennzeichnet, dass** sämtliche Daten des Kontrollsystems, ohne dass sie verfälscht werden können, automatisch gespeichert werden und dass sie on-line zur Verfügung stehen, wobei die zentrale Kontrollstation über das Telefonnetz, Satelliten, Internet oder ähnliche Einrichtungen Warnmeldungen erhält.

## Revendications

1. Procédé pour la production et la sélection de granulés incluant l'étape consistant à fournir une installation de production de granulés, et l'étape de production des granulés à partir d'une biomasse, **caractérisé en ce qu'**il inclut l'étape consistant à analyser tous les granulés traversant l'installattion de production.

2. Procédé selon la revendication 1, **caractérisé en ce qu'**il prévoit de rejeter tous les granulés considérés nocifs et de mettre sur le marché uniquement des granulés considérés appropriés.

3. Procédé selon la revendication 1, **caractérisé en ce que** les granulés sont analysés de manière continue au cours du cycle de production pour vérifier la présence de substances nocives y compris les hydrocarbures.

4. Procédé selon la revendication 1, **caractérisé en ce que** les granulés sont analysés de manière continue au cours du cycle de production pour vérifier la présence de formaldéhyde.

5. Procédé selon la revendication 1, **caractérisé en ce que** les granulés sont analysés de manière continue au cours du cycle de production pour vérifier la présence de radioactivité.

6. Procédé selon la revendication 1, **caractérisé en ce qu'**il comprend les étapes suivantes :
a - mettre les granulés à analyser dans un silo ;
b - mettre tes granulés du silo de l'étape (a) sur une bande transporteuse;
c - collecter et analyser en contenu les granulés dans une chambre de contrôle sur le parcours de la bande transporteuse;
d - effectuer sur ledit parcours une vérification de la radiation de tous les granulés ;
e - terminer le passage des granulés à la décharge en passant d'abord à travers un système de décharge à trois voies commandé par la chambre de commande, qui envoie les granulés aux silos de stockage en fonction de la qualité détectée ;
f - un silo reçoit les granulés qui peuvent être emballés et mis sur le marché;
g - un silo reçoit les granulés qui n'ont pas passé le contrôle de qualité, où ils sont pesés.

7. Procédé selon la revendication 6, **caractérisée en ce que** toutes données d système de contrôle sont automatiquement stockées sans possibililité de falsification et qu'elles sont disponibles en ligne avec une alarme pour la station de contrôle centralisée par l'intermédiaire d'une connexion par ligne téléphonique ou par satellite, Internet ou autre connexion similaire.
